# EUROPEAN PATENT SPECIFICATION

(11) **EP 1 777 108 B1**
(45) Date of publication and mention of the grant of the patent: **18.08.2010**
(21) Application number: 06254538.9
(22) Date of filing: 31.08.2006
(51) Int. Cl.: B60R 1/12, G07B 15/00

(54) **Inner mirror**
Innenspiegel
Rétroviseur intérieur

(30) Priority: 18.10.2005 JP 2005303081
(43) Date of publication of application: 25.04.2007
(73) Proprietor: Murakami Corporation, Shizuoka-shi (JP)
(72) Inventor: Motomiya, Masahiro, Murakami Corporation, Fujieda-shi Shizuoka (JP); Sato, Hidenori, Murakami Corporation, Fujieda-shi Shizuoka (JP)
(74) Representative: Piésold, Alexander James

(56) References cited:
- EP-A2- 1 103 420
- DE-A1- 19 904 099
- JP-A- 8 297 758
- US-A1- 2005 078 389
- US-B1- 6 172 618

## Description

The present invention relates to an inner mirror that is installed inside a vehicle cabin of an automobile.

An inner mirror having a built-in automatic toll collection device (so-called in-vehicle ETC device) is disclosed in Japanese Laid-Open Patent Publication No. H08-297758 (JP-A- 8297758, FIGS. 5 to 7) . This inner mirror is equipped with an automatic toll collection device and a rear-view mirror, mounted so as to cover an operating unit of the automatic toll collection device, and with this inner mirror, the automatic toll collection device can be operated by flipping the mirror upward.

With the inner mirror of the Patent Publication No. H08-297758, because the mirror is mounted integrally to a housing of the automatic toll collection device, the mirror and the automatic toll collection device cannot be separated. With this inner mirror, just the automatic toll collection device cannot be attached or detached alone, and for example, to repair or replace the automatic toll collection device, the entire inner mirror, including the mirror, must be removed from the vehicle. Also, because the inner mirror is a security part, when the inner mirror is removed from the vehicle, driving must be avoided or driving must be performed upon mounting a spare inner mirror.

The above issue applies not only to cases where an automatic toll collection device is built into the inner mirror but applies in common to cases where a camera, any of various sensors, a telephone device for hands-free phoning, or other in-vehicle article is built into (housed in) the inner mirror.

Based on such a standpoint, an object of the present invention is to provide an inner mirror that enables incorporation of an automatic toll collection device and other in-vehicle articles, and that enables just the in-vehicle articles to be attached, detached, or put in and out readily.

EP-A2-1103420, in figure 17, discloses an inner mirror as in the preamble of claim 1.

The present invention, which has been made to achieve the above object, provides an inner mirror including: a mirror body tiltably mountable on a front end of a stay that extends from a member forming part of a vehicle cabin; a mirror for rear viewing, disposed at a front side of the mirror body; and a cover disposed at a back side of the above-described mirror body; wherein a space which enables an in-vehicle article of an automobile to be installed is formed by the mirror body and the cover; characterised in that the cover is a separate member from the mirror body, such that the in-vehicle article can be accessed by opening or removing the cover, and such that, when the mirror body is, in use, mounted on the stay, the in-vehicle article can be accessed without hindering the use of the mirror for rear viewing.

With the present invention, in a state in which the inner mirror is mounted on a vehicle, the rear side of the vehicle shall be referred to as the "front side," and the opposite side (that is, the forward side of the vehicle) shall be referred to as the "back side." "In-vehicle articles" shall refer comprehensively to any of automatic toll collection devices, cameras, any of various sensors, antennas, telephone devices for hands-free phoning, speakers, microphones, portable audio players, map lamps and other illumination devices, safety warning lamps, emergency vehicle warning lamps, and other in-vehicle devices that are installed in an automobile.

The present invention is characterized in that a space enabling housing of the in-vehicle articles is secured using the cover, which is a separate member from the mirror body. The in-vehicle articles can thus be attached, detached, or put in and out simply by removing the cover or opening the cover. That is, according to the present invention, because the in-vehicle articles can be detached, etc., without removing the mirror body from the stay, the use of the mirror, which is a security part, is not hindered when the in-vehicle articles are being repaired, replaced, etc. Also, because the cover is made a separate member from the mirror body, covers that differ in color, design, etc., can be exchanged according to a driver's choice.

With the present invention, holding portions that detachably hold the above-described in-vehicle articles may be formed on a back side face of the above-described mirror body. By doing so, the in-vehicle articles can be fixed to the mirror body without using an adhesive agent, etc.

With the present invention, a connector that engages with a terminal formed on an above-described in-vehicle article may be disposed on the back side face of the above-described mirror body, and a cable for at least one of either power supplying or information communication may be connected to the connector. By this arrangement, even when the in-vehicle article is an article that requires electrical power or is article that transmits and receives information (control signals and output signals), a task of attaching or detaching the in-vehicle article can be performed even more readily.

With the present invention, a ring-like member that covers a periphery of the above-described mirror may be disposed on the front side of the above-described mirror body. With this arrangement, falling-off of the mirror can be prevented and the aesthetic appearance of the front side of the inner mirror can be improved.

With the inner mirror according to the present invention, just the in-vehicle articles can be attached, detached, or put in and out readily.

A preferred embodiment of the present invention will now be described by way of example only and with reference to the accompanying drawings in which:
FIG. 1A is a perspective view of an inner mirror according to an embodiment of the present invention as viewed from a front side;
FIG. 1B is a perspective view of the inner mirror in FIG. 1A as viewed from a back side;
FIG. 2 is an exploded perspective view of the inner mirror as viewed from the front side;
FIG. 3 is an exploded perspective view of the inner mirror as viewed from the back side.
FIG. 4A is a sectional view of the inner mirror as sectioned along a plane containing the arrow X1 in FIG. 3A;
FIG. 4B is a sectional view of the inner mirror as sectioned along a plane containing the arrow X2 in FIG. 3A;
FIG. 4C is a sectional view of the inner mirror as sectioned along a plane containing the arrow X3 in FIG. 3A;
FIG. 4D is a sectional view of the inner mirror as sectioned along a plane containing the arrow X4 in FIG. 3A;
FIG. 5 is a perspective view of moving states of a cover; and
FIG. 6 is a perspective view of a modification example of an inner mirror according to a preferred embodiment of the present invention.

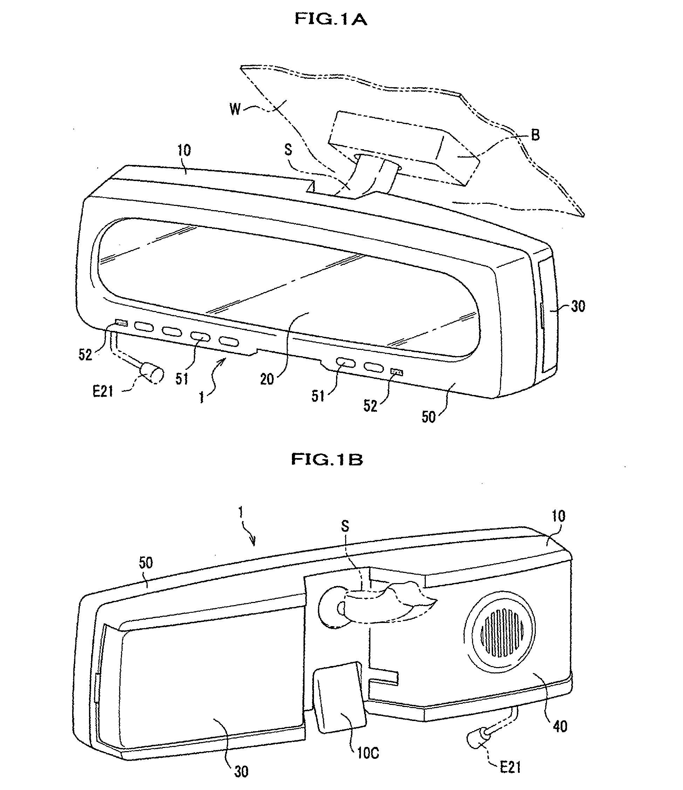

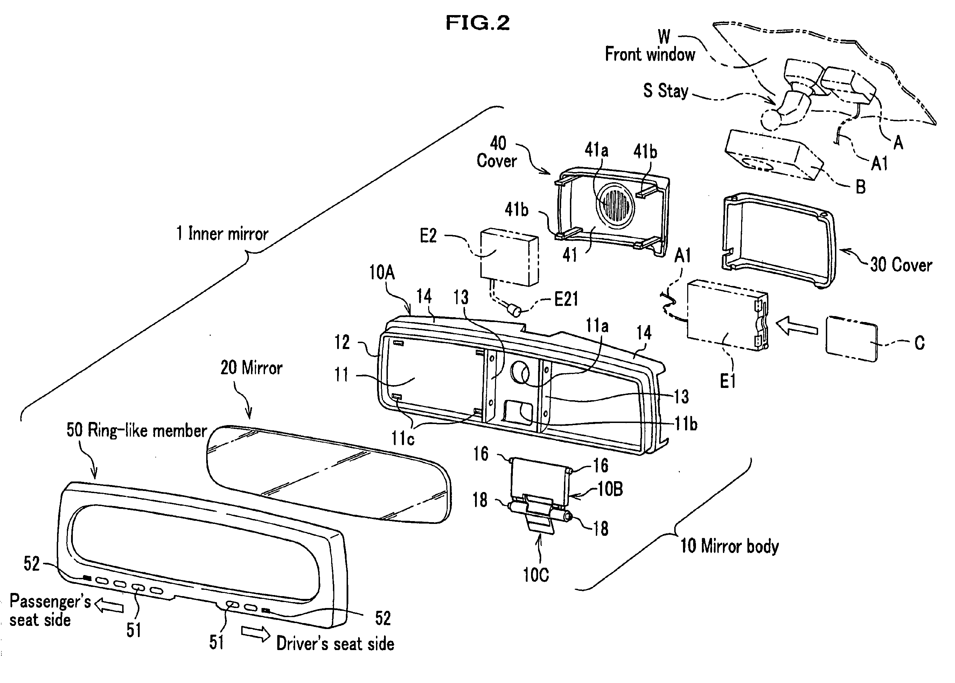

As shown in FIG. 1A, an inner mirror 1 according to an embodiment of the present invention is mounted on a stay S that extends from a front window W that forms a vehicle cabin, and is equipped with a mirror body 10, a rear-view mirror 20, covers 30 and 40 (see FIG. 1B), and a ring-like member 50. As shown in FIG. 2, the stay S has its base end portion affixed to an inner face of the front window W by adhesion or other means. Although not shown, the stay S may be affixed instead to a roof panel, etc.

The inner mirror 1 is arranged to enable incorporation of in-vehicle articles E1 and E2. Although, with the present embodiment, a case where the in-vehicle article E1, which is positioned on the driver's seat side (right side in FIG. 2), is an automatic toll collection device and the in-vehicle article E2, which is positioned on the front passenger's seat side (left side in FIG. 2) , is a telephone device for hands-free phoning shall be described, this is not intended to restrict the type of in-vehicle articles to be incorporated in the inner mirror according to the present invention.

The automatic toll collection device that is the in-vehicle article E1 performs communication with an antenna unit outside the vehicle via an antenna unit A affixed to the front window W to perform settlement of toll fares, etc. In-vehicle article E1 is connected to antenna unit A via a cable A1.

The telephone device that is the in-vehicle article E2 enables hands-free phoning to be performed by receiving audio signals transmitted from a mobile phone or other telephone terminal, outputting the received audio signals from a speaker (not shown), collecting the voice, etc., emitted by a passenger and converting the voice, etc., to audio signals by means of a microphone E21, and transmitting the audio signals to a telephone terminal.

In-vehicle articles E1 and E2 are affixed by adhesion, screwing, or other means to a back side face of the mirror body 10 (more specifically, a back side face of a base plate portion 11 to be described later). Also, power supply cables (not shown) are connected to in-vehicle articles E1 and E2.

The arrangements of the mirror body 10, mirror 20, covers 30 and 40, and ring-like member 50 that make up the inner mirror 1 shall now be described in detail.

The mirror body 10 is tiltably mounted on a front end of the stay S that extends from the front window W, and has a main body 10A, which is a base of the inner mirror 1, a bracket 10B, mounted on the main body 10A, and a lever 10C, engaged with a lower end of the bracket 10B.

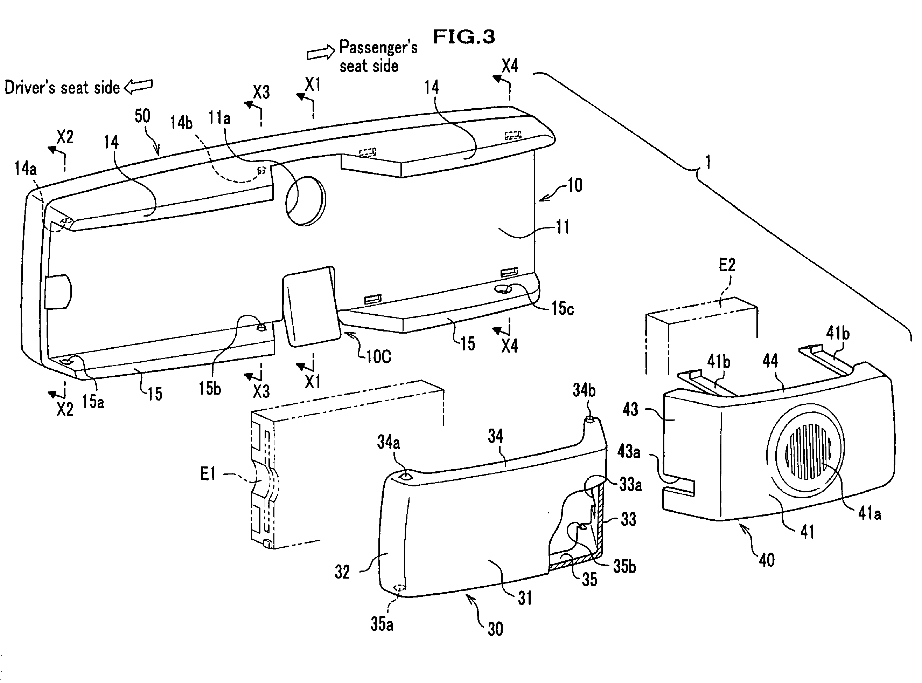

The main body 10A is formed from a hard resin in the present embodiment and has a base plate portion 11 formed in a plate-like form, a peripheral wall portion 12 protruding from a periphery of a front side of the base plate portion 11, a pair of ribs 13 erected at a central portion of the front side of the base plate portion 11, upper wall portions 14 protruding from an upper edge of a back side of the base plate portion 11, and lower wall portions 15 protruding from a lower edge of the back side of the base plate portion 11 (see FIG. 3).

At a central portion of the base plate portion 11 is formed an insertion hole 11a, through which the front end of the stay S is inserted. Furthermore, at a lower side of insertion hole 11a is formed an insertion hole 11b, through which the lever 10C is inserted. Also, at suitable locations of the base plate portion 11 (in FIG. 2, in a region to the left side of insertion hole 11a) are formed a plurality of latching holes 11c, through which latching tabs 41b, to be described later, of the cover 40 are inserted.

Ribs 13 are positioned vertically and oppose each other across insertion holes 11a and 11b of the base plate portion 11.

As shown in FIG. 3, upper wall portion 14 and lower wall portion 15 are formed in each of a region of the base plate portion 11 at the driver's seat side (the region at the left side of insertion hole 11a in FIG. 3) and a region at the front passenger's seat side (the region at the right side of insertion hole 11a in FIG. 3).

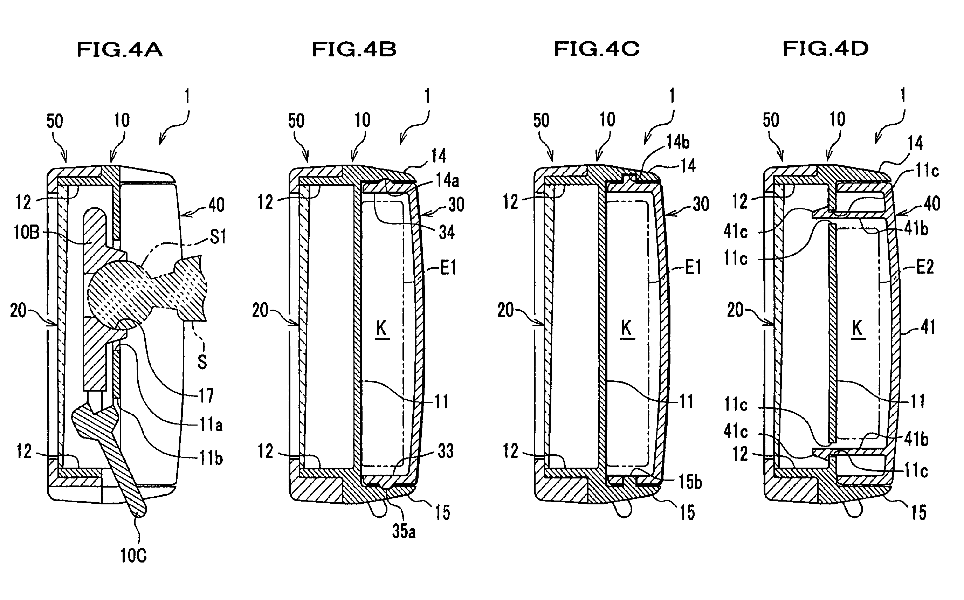

The upper wall portion 14 located at the driver's seat side of insertion hole 11a, has an engaging recess 14a (see FIG. 4B) formed on a lower face at the driver's seat side end thereof, and has a bearing 14b (see FIG. 4C) recessed in a lower face at the front passenger's seat side end (insertion hole 11a side) thereof. An engaging protrusion 34a, formed on the cover 30, engages detachably with engaging recess 14a, and a shaft portion 34b, protruded from the cover 30, engages rotatably with bearing 14b.

The lower wall portion 15, located at the driver's seat side of insertion hole 11a, has an engaging recess 15a, formed on an upper face at the driver's seat side end thereof, and has a shaft portion 15b, protruded from an upper face at the front passenger's seat side (insertion hole 11a side) end thereof. An engaging protrusion 35a, formed on the cover 30, engages detachably with engaging recess 15a, and shaft portion 15b engages rotatably with a shaft hole 35b, formed in the cover 30. In the lower wall portion 15 at the front passenger's seat side of insertion hole 11a is formed a lead-out hole 15c for leading out microphone E21 (see FIG. 2) of the telephone device, which is the in-vehicle article E2, to the exterior.

The bracket 10B, shown in FIG. 2, is mounted on ribs 13 of the main body 10A so as to be rotatable (tiltable) to the front and rear about supporting shafts 16 formed on an upper end thereof. As shown in FIG. 4A, a swivel plate 17 with a spherical crown shape is formed on the back side of the bracket 10B. A spherical pivot S1, formed on the front end of the stay S, is slidably fitted into swivel plate 17.

The lever 10C is used to switch on and off a glare-proof effect and, as shown in FIG. 2, is mounted on ribs 13 so as to be rotatable (tiltable) to the front and rear about supporting shafts 18. The lever 10C engages with a lower end of the bracket 10B, and when the lever 10C is rotated, the bracket 10B tilts and consequently, the orientation of the mirror 20 changes along with the main body 10A.

The mirror 20 is disposed on the front side of the mirror body 10. The mirror 20 of this embodiment is a prism mirror and, as shown in FIGS. 4A to 4D, is fitted onto an inner side of the peripheral wall portion 12 of the main body 10A.

As shown in FIG. 3, covers 30 and 40 are disposed at the back side of the mirror body 10 and forms, together with the mirror body 10, a space K in which the in-vehicle article E1 (or the in-vehicle article E2) can be housed (see FIGS. 4B to 4D). In the present embodiment, covers 30 and 40 are respectively disposed between the upper wall portion 14 and the lower wall portion 15 that oppose each other vertically.

The cover 30 is formed in a shape that just fits between the upper wall portion 14 and the lower wall portion 15 and is mounted in a manner enabling opening and closing (rotation) at a region at the driver's seat side of the mirror body 10. The cover 30 has a back side face portion 31 that opposes the base plate portion 11 of the mirror body 10 across an interval, an outer face portion 32, formed on one end (the driver's seat end) of the back side face portion 31, an inner face portion 33, formed on the other end (the front passenger's seat end) of the back side face portion 31, an upper face portion 34, formed across upper ends of the back side face portion 31, outer face portion 32, and inner face portion 33, and a lower face portion 35, formed across lower ends of the back side face portion 31, outer face portion 32, and inner face portion 33.

A notch 33a for leading cables into a space K (see FIG. 4) is formed in the inner face portion 33.

When the cover 30 is closed, the upper face portion 34 opposes the lower face of the upper wall portion 14 of the mirror body 10 (see FIG. 4B). The upper face portion 34 has engaging protrusion 34a formed on an upper face at the outer face portion 32 end thereof, and has shaft portion 34b protruded from an upper face at the inner face portion 33 end thereof. The engaging protrusion 34a engages detachably with engaging recess 14a of the upper wall portion 14, and the shaft portion 34b engages rotatably with bearing 14b of the upper wall portion 14.

When the cover 30 is closed, the lower face portion 35 opposes the upper face of the lower wall portion 15 of the mirror body 10 (see FIG. 4B). The lower face portion 35 has the engaging protrusion 35a (see FIG. 4B) formed on a lower face of the outer face portion 32 end thereof, and has the shaft hole 35b formed in the inner face portion 33 end thereof. The engaging protrusion 35a engages detachably with engaging recess 15a of the lower wall portion 15, and shaft portion 15b of the lower wall portion 15 engages rotatably with the shaft hole 35b.

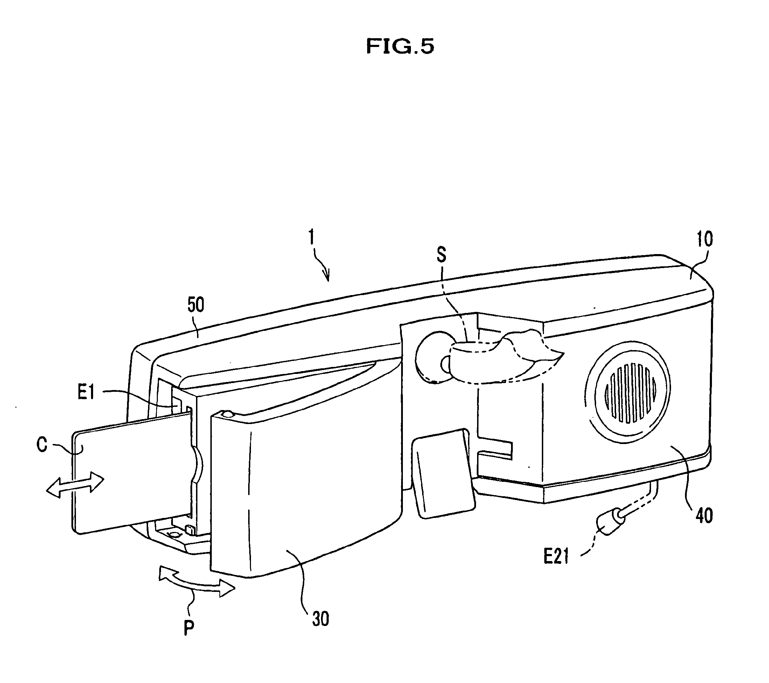

The cover 30, which is thus arranged, rotates about a straight line, joining shaft portion 34b and shaft hole 35b, as a rotation axis. That is, as shown in FIG. 5, the entirety of the cover 30 opens and closes (rotates) in front and back directions (in directions of white arrows P in the drawing) about the stay S side end as the rotation axis. When the cover 30 is opened, the space K (see FIGS. 4B to 4D) is exposed to enable operation of in-vehicle article E or putting in and out of a card C. Attachment and detachment of in-vehicle article E are also enabled. When the cover 30 is closed, the in-vehicle article E1 (see FIG. 2) is completely covered as shown in FIG. 1A, thereby providing a simple outer appearance, and this state aids in preventing theft of card C because card C (see FIG. 2) inserted in the in-vehicle article E1 is invisible from the exterior in this state. Also, when the cover 30 is closed, because engaging protrusions 34a and 35a engage with engaging recesses 14a and 15a shown in FIG. 3, the cover 30 is not opened by vibration during travel, etc.

To attach or detach the in-vehicle article E1, the cover 30 may be removed from the mirror body 10 by disengaging the engagement of shaft portion 34b of the cover 30 with bearing 14b of the mirror body 10 and disengaging the engagement of the shaft hole 35b of the cover 30 with shaft portion 15b of the mirror body 10.

As shown in FIG. 3, the other cover 40 is formed in a shape that just fits between the upper wall portion 14 and the lower wall portion 15 and is detachably mounted on a front passenger's seat side region of the mirror body 10. A plurality of slits 41a are formed in the center of a back side face portion 41. Slits 41a are for enabling sound, emitted from a speaker (not shown) provided in the in-vehicle article E2, to be heard readily. Also, as shown in FIG. 2, at four corners of the front side of back side face portion 41 are formed the latching tabs 41b corresponding to the latching holes 11c of the mirror body 10. As shown in FIG. 4D, a claw portion 41c is formed at the tip of each latching tab 41b, and by latching these claw portions 41c to the latching holes 11c, the cover 40 is fixed to the mirror body 10. Because the forms of the other portions of the cover 40 are the same as those of the above-described cover 30 at the driver's seat side, detailed description thereof shall be omitted.

The cover 40 that is thus arranged can be removed from the mirror body 10 by disengaging the engagement of the claw portions 41c with the latching holes 11c of the mirror body 10. When the cover 40 is removed from the mirror body 10, space K (see FIG. 4D) is exposed to enable attachment and detachment of the in-vehicle article E2.

The ring-like member 50, shown in FIG. 2, covers the periphery of the mirror 20, and in the present embodiment, is fitted onto the peripheral wall portion 12 of the mirror body 10 (see FIG. 4). On a lower portion of the ring-like member 50 are disposed operating portions (operation buttons and operation dials) 51 for operating and controlling in-vehicle articles E1 and E2, and indicators 52 that indicate operation states of in-vehicle articles E1 and E2.

With the inner mirror 1 according to the present embodiment that is arranged as described above, because the space K, which enables housing of the in-vehicle article E1, is secured by use of the cover 30 that is a separate member from the mirror body 10, both attachment and detachment of the in-vehicle article E1 are enabled by simply removing the cover 30 or opening the cover 30. Likewise, attachment and detachment of the in-vehicle article E2 are enabled by simply removing the cover 40. Thus, with the inner mirror 1, because the attachment and detachment of in-vehicle articles E1 and E2 are enabled without having to remove the mirror body 10 from the stay S, the use of the mirror 20, which is a security part, is not prevented when in-vehicle articles E1 and E2 are being repaired, replaced, etc.

Also, with the present embodiment, because upper wall portions 14 and lower wall portions 15 of the mirror body 10 are formed so as to avoid insertion holes 11a and 11b (the stay S and the lever 10C), and covers 30 and 40 are disposed so as to avoid insertion holes 11a and 11b, upper wall portions 14, lower wall portions 15, and covers 30 and 40 do not contact the lever 10C and stay S when the inner mirror 1 is tilted or when the lever 10C is operated.

Furthermore, with the present embodiment, because covers 30 and 40 are disposed so as to avoid the stay S, the position of the mirror 20 is substantially the same as the position of a mirror of a conventional inner mirror that does not have a space for housing in-vehicle articles E1 and E2. A driver will thus not feel discomfort even when the inner mirror 1, according to the present embodiment, is mounted in place of the conventional inner mirror. Moreover, because in replacing the conventional inner mirror with the inner mirror 1 according to the present embodiment, the stay S, which was used with the conventional inner mirror, can be used as it is, even when, for example, the inner mirror 1 is made a dealer option, it can be accommodated readily without the need to replace the stay S.

Also, with the present embodiment, because covers 30 and 40 are made separate members from the mirror body 10, covers 30 and 40 of different colors and designs can be exchanged according to a driver's choice.

Furthermore, with the present embodiment, because the ring-like member 50 is disposed, the falling off of the mirror 20 can be prevented and the aesthetic appearance of the inner mirror 1 can be improved.

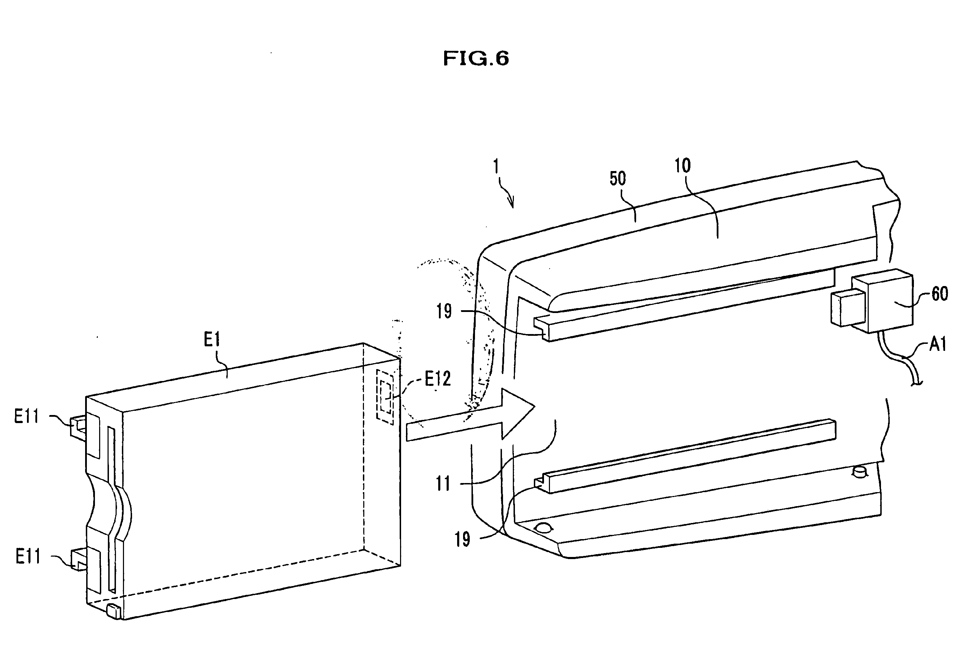

The arrangement of the inner mirror 1 is not restricted to that illustrated and may be changed as suited. For example, although, with the above-described embodiment, a case where the back side face of the base plate portion 11 of the mirror body 10 is formed flatly and the in-vehicle article E1 is affixed by adhesion or other means to the back side face of the mirror body 10 was described as an example, the present invention is not restricted thereto, and as shown in FIG. 6, the holding portions 19 that detachably hold the in-vehicle article E1 may be formed on the back side face of the mirror body 10 (more specifically, the back side face of the base plate portion 11) and the in-vehicle article E1 may be affixed using these holding portions 19. In FIG. 6, the illustration of the cover 30 is omitted.

The holding portions 19 are formed to enable fitting of engaging portions E11 formed on the in-vehicle article E1. Because the in-vehicle article E1 can then be affixed to the mirror body 10 by simply sliding the in-vehicle article E1 in a lateral direction and making the engaging portions E11 engage with the holding portions 19, an adhesive agent, etc., is made unnecessary and attachment and detachment are facilitated. Although, in FIG. 6, the holding portions 19 of an L-like shape are illustrated, this is not intended to restrict the form of the holding portions 19.

Also, a connector 60 that engages with a terminal E12 formed on the in-vehicle article E1 may be disposed at and affixed to the back side face of the mirror body 10 (more specifically, the back side face of the base plate portion 11), and cable A1 may be connected to this connector 60. Because cable A1 can thereby be connected to the in-vehicle article E1 by simply sliding the in-vehicle article E1 in a lateral direction, the task of attaching or detaching the in-vehicle article E1 can be facilitated further. Although not shown, a power supplying cable may be connected to connector 60 or an information communication cable may be connected to connector 60.

Also, although with the above-described embodiment, the inner mirror 1, with which the entirety of the cover 30 opens and closes (rotates), was described as an example, the present invention is not restricted thereto, and although not shown, a portion of the cover may be arranged to open and close (rotate).

Also, although with the above-described embodiment, a case where the cover 30 rotates in the front and back directions (front and rear directions) was described as an example, the present invention is not restricted thereto, and although not shown, the cover may be arranged to rotate in vertical directions.

Also, in a case where the in-vehicle article E1 is not to be installed in the space K formed by the mirror body 10 and the cover 30 (see FIGS. 4B and 4C), this space K may be used as a so-called console box. In this case, such in-vehicle articles as cards (IC cards, magnetic cards), paper currency, coins, and other small articles may be housed in the space K and can be put in and out readily.

## Claims

1. An inner mirror, comprising:
a mirror body (10);
a mirror (20) for rear viewing, disposed at a front side of the mirror body (10); and
a cover (30, 40) disposed at a back side of the mirror body (10), the cover being a separate member from the mirror body (10), such that the in-vehicle article (E1, E2) can be accessed by opening or removing the cover (30, 40);
wherein a space (K) which enables an in-vehicle article (E1, E2) of an automobile to be installed is formed by the mirror body (10) and the cover (30, 40);
**characterised in that** the mirror body is tiltably mountable on a front end of a stay (S) that extends from a member (W) forming part of a vehicle cabin and **in that**, when the mirror body (20) is, in use, mounted on the stay (S), the in-vehicle article (E1,E2) can be accessed for repair or replacement without hindering the use of the mirror (2).

2. An inner mirror according to Claim 1,
wherein on a back side face of the mirror body (10) there is a holding portion (19) formed to detachably hold the in-vehicle article (E1, E2).

3. An inner mirror according to Claim 1 or 2,
wherein a connector (60) that is engageable with a terminal (E12) formed on the in-vehicle article (E1) is disposed on a back side face of the mirror body (10), and a cable wire (A1) for at least either a power supplying cable wire or an information communication cable one is connected to the connector (60).

4. The inner mirror according to any one of Claims 1 to 3,
wherein on a front side of the mirror body (10) there is a ring-like member (50) that covers a periphery of the mirror (20).

5. The inner mirror according to claim 4, wherein the ring-like member (50) comprises operating portions (51) for operating and controlling the in-vehicle article (E1, E2) and indicators (52) that indicate operation states of the in-vehicle article (E1, E2).

## Patentansprüche

1. Innenspiegel, der aufweist:
einen Spiegelkörper (10);
einen Spiegel (20) zum Nach-Hinten-Schauen, der an einer Vorderseite des Spiegelkörpers (10) angebracht ist; und
eine Abdeckung (30, 40), die an einer Rückseite des Spiegelkörpers (10) angebracht ist, wobei die Abdeckung ein vom Spiegelkörper (10) getrenntes Bauteil ist, so dass auf den bzw. einen fahrzeuginternen Gegenstand (E1, E2) durch Öffnen oder Entfernen der Abdeckung (30, 40) zugegriffen werden kann;
wobei ein Raum (K), welcher ermöglicht einen fahrzeuginternen Gegenstand (E1, E2) eines Automobils zu installieren, durch den Spiegelkörper (10) und die Abdeckung (30, 40) gebildet wird;
**dadurch gekennzeichnet, dass**
der Spiegelkörper verschwenkbar an einem vorderen Ende einer Abstützung (S) montiert ist, die sich von einem Bauteil (W) erstreckt, das einen Teil der Fahrzeugkabine bildet, und dadurch dass, wenn der Spiegelkörper (20) während der Verwendung an der Abstützung (S) montiert ist, auf den fahrzeuginternen Gegenstand (E1, E2) zur Reparatur oder zum Ersatz zugegriffen werden kann, ohne die Verwendung des Spiegels (2) zu behindern.

2. Innenspiegel nach Anspruch 1, wobei sich an einer hinteren Seitenfläche des Spiegelkörpers (10) ein Halteabschnitt (19) befindet, der geformt ist, um den fahrzeuginternen Gegenstand (E1, E2) entfernbar zu halten.

3. Innenspiegel nach Anspruch 1 oder 2, wobei ein Verbinder bzw. Stecker (60), der in einen Anschluss (E12) eingreifen kann, der an dem fahrzeuginternen Gegenstand (E1) ausgebildet ist, an einer hinteren Seitenfläche des Spiegelkörpers (10) angeordnet ist, und eine Kabelleitung (A1) für zumindest entweder eine stromliefernde Kabelleitung oder eine Informations-Kommunikations-Kabelleitung mit dem Verbinder (60) verbunden ist.

4. Innenspiegel nach einem der Ansprüche 1 bis 3, wobei sich an einer Vorderseite des Spiegelkörpers (10) ein ringartiges Element (50) befindet, das einen Umfang des Spielgels (20) bedeckt bzw. überdeckt.

5. Innenspiegel nach Anspruch 4, wobei das ringartige Element (50) Bedienabschnitte (51) zum Bedienen und Steuern des fahrzeuginternen Gegenstandes (E1, E2) und Indikatoren (52), die Betriebszustände des fahrzeuginternen Gegenstands (E1, E2) anzeigen, aufweist.

## Revendications

1. Miroir interne, comprenant :
un corps de miroir (10) ;
un miroir (20) pour voir derrière, disposé d'un côté avant du corps de miroir (10) ; et
un capot (30, 40) disposé d'un côté arrière du corps de miroir (10), le capot étant un élément séparé du corps de miroir (10), de sorte que l'on puisse accéder à l'article embarqué (E1, E2) en ouvrant ou en retirant le capot (30, 40) ;
dans lequel un espace (K) qui permet d'installer un article embarqué (E1, E2) d'une automobile est formé par le corps de miroir (10) et le capot (30, 40) ;
**caractérisé en ce que** le corps de miroir peut être monté de manière inclinable sur une extrémité avant d'un support (S) qui s'étend d'un élément (W) faisant partie d'un habitacle de véhicule, et **en ce que**, lorsque le corps de miroir (20) est, en utilisation, monté sur le support (S), on peut accéder à l'article embarqué (E1, E2) pour sa réparation ou son remplacement sans gêner l'utilisation du miroir (2).

2. Miroir interne selon la revendication 1,
dans lequel, sur une face arrière du corps de miroir (10), une partie de maintien (19) est formée pour maintenir de manière détachable l'article embarqué (E1, E2).

3. Miroir interne selon la revendication 1 ou 2,
dans lequel un connecteur (60) qui peut être mis en prise avec une borne (E12) formée sur l'article embarqué (E1) est disposé sur une face arrière du corps de miroir (10), et un conducteur de câble (A1) pour au moins un conducteur de câble d'alimentation ou un câble de communication d'informations est connecté au connecteur (60).

4. Miroir interne selon l'une quelconque des revendications 1 à 3,
dans lequel, d'un côté avant du corps de miroir (10), un élément en forme de bague (50) recouvre une périphérie du miroir (20).

5. Miroir interne selon la revendication 4, dans lequel l'élément en forme de bague (50) comprend des parties de commande (51) pour mettre en oeuvre et commander l'article embarqué (E1, E2) et des indicateurs (52) qui indiquent les états de fonctionnement de l'article embarqué (E1, E2).
